# EUROPÄISCHE PATENTANMELDUNG

(11) **EP 3 812 737 A1**
(43) Veröffentlichungstag der Anmeldung: **28.04.2021**
(21) Anmeldenummer: 20194244.8
(22) Anmeldetag: 03.09.2020
(51) Int. Cl.: G01M 99/00, B60R 21/015, G01G 19/414, G01G 23/01, G01L 25/00

(54) **VERFAHREN ZUR FUNKTIONSPRÜFUNG EINER SITZBELEGUNGSERKENNUNG EINES FAHRZEUGSITZES**

(30) Priorität: 21.10.2019 DE 102019128264
(71) Anmelder: Audi AG, 85045 Ingolstadt (DE)
(72) Erfinder: Prummer, Markus, 85088 Vohburg (DE)

(57) **Zusammenfassung**

Die Erfindung betrifft ein Verfahren zur Funktionsprüfung einer Sitzbelegungserkennung eines Fahrzeugsitzes (11), bei der eine elektronische Fahrzeug-Steuereinheit (7) mit einem im Fahrzeugsitz (11) verbauten Sensorelement (5) in Signalverbindung ist, wobei das Sensorelement (5) bei einer auf die Sitzfläche (9) des Fahrzeugsitzes (1) wirkenden Druckbeaufschlagung eines Sitzbelegung erkennt und ein entsprechendes Belegungssignal (B) erzeugt und zur elektronischen Steuereinheit (7) leitet. Erfindungsgemäß drückt bei der Funktionsprüfung eine Stelleinheit (17) einen, den Fahrzeuginsassen nachbildenden Prüfkörper (19) mit einer vorgegebenen, das Insassengewicht nachbildenden Prüfkraft (F) auf die Sitzfläche (9) des Fahrzeugsitzes (1). Eine elektronische Prüfeinheit (15) ist in Signalverbindung mit dem Sensorelement (5) und prüft, ob ein vom Sensorelement (5) erzeugtes Belegungssignal (B) vorliegt.

## Beschreibung

Die Erfindung betrifft ein Verfahren zur Funktionsprüfung einer Sitzbelegungserkennung eines Fahrzeugsitzes nach dem Oberbegriff des Anspruches sowie eine Prüfanordnung zur Durchführung eines solchen Verfahrens nach dem Anspruch 7.

Ein Fahrzeugsitz kann eine Sitzbelegungserkennung aufweisen, bei der eine elektronische Steuereinheit mit einem im Fahrzeugsitz verbauten Sensorelement in Signalverbindung ist. Bei einem mit einem Fahrzeuginsassen belegten Fahrzeugsitz wirkt das Insassen-Körpergewicht auf die Sitzfläche des Fahrzeugsitzes. In diesem Fall erkennt das Sensorelement eine Sitzbelegung und erzeugt ein entsprechendes Belegungssignal, das zur elektronischen Steuereinheit geleitet wird. Die elektronische Steuereinheit kann in einem Insassenschutzsystem eingebunden sein. Für den Fall, dass die Sitzbelegungserkennung ermittelt, dass ein Fahrzeugsitz nicht belegt ist, kann in einer Fahrzeug-Crashsituation eine, dem nicht belegten Fahrzeugsitz zugeordnete Airbagvorrichtung deaktiviert bleiben bzw. während der Fahrt eine optische oder akustische Warnung an die Insassen ausgegeben werden.

In einem gattungsgemäßen Verfahren erfolgt werksseitig eine aufwendige Funktionsprüfung, bei der die Funktionsfähigkeit der Sitzbelegungserkennung überprüft wird. Hierzu setzen sich Prüf-Personen unterschiedlicher Körperform sowie unterschiedlichen Körpergewichts in gegebenenfalls variierenden Sitzpositionen auf den zu prüfenden Fahrzeugsitz. Sofern das im Fahrzeugsitz verbaute Sensorelement ein Belegungssignal erzeugt, ist eine Funktionsfähigkeit der Sitzbelegungserkennung gegeben.

Aus der DE 198 10 641 C1 ist ein Prüfstand zur Sitzerprobung eines Kraftfahrzeugsitzes bekannt.

Die Aufgabe der Erfindung besteht darin, ein Verfahren zur Funktionsprüfung einer Sitzbelegungserkennung eines Fahrzeugsitzes sowie eine Prüfanordnung zur Durchführung eines solchen Verfahrens bereitzustellen, mit der die Funktionsprüfung im Vergleich zum Stand der Technik mit reduziertem Aufwand erfolgen kann.

Die Aufgabe ist durch die Merkmale des Anspruches 1 oder 7 gelöst. Bevorzugte Weiterbildungen der Erfindung sind in den Unteransprüchen offenbart.

Gemäß dem kennzeichnenden Teil des Anspruches 1 erfolgt die Funktionsprüfung nicht mehr mit Prüf-Personen, sondern vielmehr mit einer Stelleinheit, die einen, den Fahrzeuginsassen nachbildenden Prüfkörper mit einer vorgegebenen, das Insassengewicht nachbildenden Prüfkraft auf die Sitzfläche des Fahrzeugsitzes drückt. Eine elektronische Prüfeinheit, die in Signalverbindung mit dem Sensorelement ist, prüft, ob ein vom Sensorelement erzeugtes Belegungssignal vorliegt. Bei Vorliegen eines solchen Bewegungssignals ermittelt die elektronische Prüfeinheit die Funktionsfähigkeit der Sitzbelegungserkennung. Insbesondere erzeugt die Prüfeinheit ein entsprechendes Funktionsfähigkeitssignal, sofern das Belegungssignal des Sensorelements vorliegt, bzw. ein Fehlersignal, sofern trotz Prüfkörper-Druckbeaufschlagung kein Belegungssignal des Sensorelements vorliegt.

In einer technischen Umsetzung kann die Stelleinheit robotergesteuert den Prüfkörper gegen die Sitzfläche des Fahrzeugsitzes mit einer vorgegebenen Prüfkraft drücken. Die Stelleinheit kann ein Roboterarm sein. Bei Durchführung der Funktionsprüfung kann die Prüfeinheit die Stelleinheit mit einem Stellsignal ansteuern. Auf dessen Grundlage kann die Stelleinheit den Prüfkörper mit der vorgegebenen Prüfkraft gegen die Sitzfläche des Fahrzeugsitzes drücken.

Besonders bevorzugt im Hinblick auf eine vollautomatische Funktionsprüfung ist es, wenn die Stelleinheit mitsamt Prüfkörper, das im Fahrzeugsitz verbaute Sensorelement und die elektronische Prüfeinheit in einer Steuerstrecke eingebunden sind, mittels der die Funktionsprüfung vollautomatisch durchführbar ist.

Im Hinblick auf eine aussagekräftige Funktionsprüfung ist es bevorzugt, wenn der Prüfkörper U-förmig ausgebildet ist und in etwa ein Insassen-Becken sowie Insassen-Oberschenkel nachbilden, die in Druckanlage mit der Sitzfläche des Fahrzeugsitzes bringbar sind. Bevorzugt kann eine Mehrzahl von Prüfkörpern unterschiedlicher Geometrie bereitgestellt werden, mit deren Hilfe unterschiedliche Fahrzeuginsassen-Körperformen nachbildbar sind.

Im Hinblick auf eine umfassende Funktionsprüfung ist es bevorzugt, wenn diese bei variierenden Prüfkörper-Geometrien, variierender Prüfkraft und/oder bei variierender Prüfkörper-Position auf der Sitzfläche des Fahrzeugsitzes durchgeführt wird. Bevorzugt kann bei der Funktionsprüfung eine Prüfroutine erfolgen, bei der für zumindest eine Prüfkörper-Geometrie variierende Prüfkräfte mit variierenden Prüfkörper-Positionen zu Wertepaaren kombiniert werden. Für jedes Wertepaar, bestehend aus einer Prüfkraft sowie einer Prüfkörper-Position, kann die Prüfeinheit ein Funktionsfähigkeitssignal ermitteln, sofern das Sensorelement ein Belegungssignal erzeugt, oder ein Fehlersignal ermitteln, sofern das Sensorelement kein Belegungssignal erzeugt.

Nachfolgend ist ein Ausführungsbeispiel der Erfindung anhand der beigefügten Figuren beschrieben.

Es zeigen:
- Figur 1: in einer grob schematischen Ansicht ein mit einer Sitzbelegungserkennung ausgestatteter Fahrzeugsitz; und
- Figur 2: eine Prüfanordnung zur Durchführung einer Funktionsprüfung der Sitzbelegungserkennung des Fahrzeugsitzes.

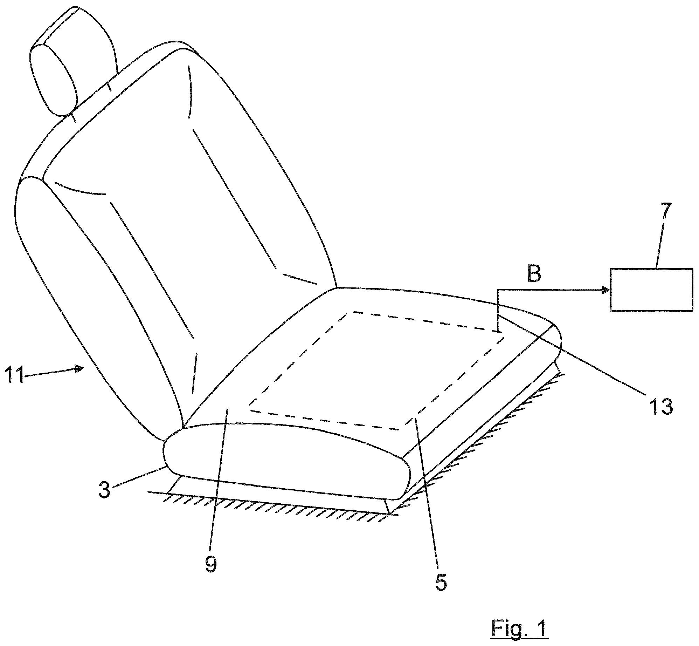

In der Figur 1 in einer Seitenansicht grob vereinfacht ein Fahrzeugsitz 11 gezeigt, in dessen Sitzteil 3 ein Sensorelement 5 verbaut ist, das zusammen mit einer elektronischen Steuereinheit 7 Bestandteil einer Sitzbelegungserkennung ist. Das Sensorelement 5 ist an seinem Signalausgang 13 in Signalverbindung mit der elektronischen Steuereinheit 7, die einem Insassenschutzsystem des Fahrzeugs zugeordnet ist. Sofern der Fahrzeugsitz 11 mit einem Fahrzeuginsassen belegt ist, wirkt dessen Körpergewicht auf die Sitzfläche 9 des Fahrzeugsitzes, wodurch das Sensorelement 5 eine Sitzbelegung erkennt und ein entsprechendes Belegungssignal B erzeugt und zur elektronischen Steuereinheit 7 leitet.

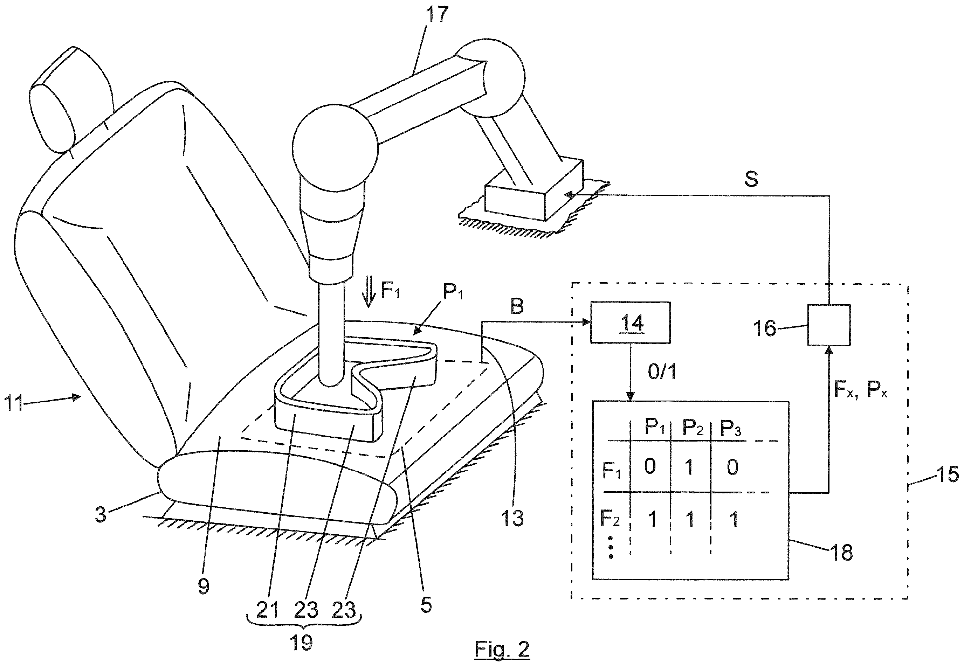

Bei der Fahrzeugsitz-Montage erfolgt werksseitig in einem Prüfstand eine Funktionsprüfung der Sitzbelegungserkennung, wie sie nachfolgend anhand der Fig. 2 beschrieben wird. Demzufolge wird der Signalausgang 13 des im Fahrzeugsitz 11 verbauten Sensorelements 5 an einer elektronischen Prüfeinheit 15 angeschlossen. Die Prüfeinheit 15 ist in Signalverbindung mit einem Roboterarm 17, an dessen freiem Ende ein Prüfkörper 19 montiert ist. Der Prüfkörper 19 ist in einer Ansicht von oben in etwa U-förmig ausgebildet, wobei eine U-Basis 21 in etwa ein Insassen-Becken nachbildet und die davon abragenden U-Schenkel 23 jeweils Insassen-Oberschenkel nachbilden. Die elektronische Prüfeinheit 15, der Roboterarm 17 mitsamt Prüfkörper 19 sowie das Sensorelement 5 sind in einer Steuerstrecke eingebunden, mittels der die Funktionsprüfung der Sitzbelegungserkennung vollautomatisch durchführbar ist.

In der Fig. 2 weist die elektronische Prüfeinheit 15 als Programm-Bausteine eine Datenbank 18 auf, in der beispielhaft eine Mehrzahl unterschiedlich großer Prüfkräfte F₁, F₂, F₃, ... und eine Mehrzahl von Prüfkörper-Positionen P₁, P₂, P₃,... tabellarisch hinterlegt sind und eine Prüf-Matrix aufspannen. Bei der Funktionsprüfung wird aus der Datenbank 18 zumindest ein Wertepaar aus Prüfkraft F und Prüfkörper-Position P ausgelesen und zu einer Signalerzeugungseinheit 16 geleitet. Diese erzeugt auf der Grundlage des ausgelesenen Wertepaars (F, P) ein Steuersignal S, mit dem der Roboterarm 17 mit der ausgelesenen Prüfkraft F in der beabsichtigten Prüfkörper-Position P auf die Sitzfläche 9 drückt. Mittels einer Auswerteeinheit 14, die in Signalverbindung mit dem Signaleingang 13 des Sensorelements 5 ist, wird ermittelt, ob ein Sitzbelegungssignal B vorliegt oder nicht. Sofern ein Sitzbelegungssignal B vorliegt, generiert die Auswerteeinheit 14 ein Funktionsfähigkeitssignal "1". Sofern kein Sitzbelegungssignal B vorliegt, generiert die Auswerteeinheit 14 ein Fehlersignal "0". Das generierte Funktionsfähigkeitssignal "1" oder das Fehlersignal "0" wird in die Datenbank 18 eingelesen und dem Wertepaar zugeordnet, auf dessen Grundlage die Prüfroutine erfolgt ist.

Die oben dargelegte Prüfroutine kann mit unterschiedlichen Wertepaaren durchgeführt werden, die aus den unterschiedlich großen Prüfkräften F₁, F₂, F₃, ... und aus den unterschiedlichen Prüfkörper-Positionen P₁, P₂, P₃,... zusammengesetzt sind. In diesem Fall ermittelt die Auswerteeinheit 14 für jedes ausgelesene Wertepaar Fₓ, Pₓ ein Funktionsfähigkeitssignal "1" bzw. ein Fehlersignal "0".

### BEZUGSZEICHENLISTE:

- 3: Sitzteil
- 5: Sensorelement
- 7: elektronische Steuereinheit
- 9: Sitzfläche
- 11: Fahrzeugsitz
- 13: Sensorelement-Signalausgang
- 14: Auswerte-Baustein
- 15: Prüfeinheit
- 16: Signalerzeugungs-Baustein
- 17: Roboterarm
- 18: Datenbank
- 19: Prüfkörper
- 21: U-Basis
- 23: U-Schenkel
- B: Belegungssignal
- F: Prüfkraft
- P: Prüfkörper-Position auf der Sitzfläche 9
- S: Stellsignal

## Patentansprüche

1. Verfahren zur Funktionsprüfung einer Sitzbelegungserkennung eines Fahrzeugsitzes (11), bei der eine elektronische Fahrzeug-Steuereinheit (7) mit einem im Fahrzeugsitz (11) verbauten Sensorelement (5) in Signalverbindung ist, wobei das Sensorelement (5) bei einer auf die Sitzfläche (9) des Fahrzeugsitzes (1) wirkenden Druckbeaufschlagung eines Sitzbelegung erkennt und ein entsprechendes Belegungssignal (B) erzeugt und zur elektronischen Steuereinheit (7) leitet, **dadurch gekennzeichnet, dass** bei der Funktionsprüfung eine Stelleinheit (17) einen, den Fahrzeuginsassen nachbildenden Prüfkörper (19) mit einer vorgegebenen, das Insassengewicht nachbildenden Prüfkraft (F) auf die Sitzfläche (9) des Fahrzeugsitzes (1) drückt, dass eine elektronische Prüfeinheit (15) in Signalverbindung mit dem Sensorelement (5) ist und prüft, ob ein vom Sensorelement (5) erzeugtes Belegungssignal (B) vorliegt, und dass die elektronische Prüfeinheit (15) bei Vorliegen des Belegungssignals (B) eine Funktionsfähigkeit (1) der Sitzbelegungserkennung ermittelt.

2. Verfahren nach Anspruch 1, **dadurch gekennzeichnet, dass** die Prüfeinheit (15) in Signalverbindung mit der Stelleinheit (17), insbesondere ein Roboterarm, ist, und dass bei Durchführung der Funktionsprüfung die Prüfeinheit (15) die Stelleinheit (17) mit einem Stellsignal (S) ansteuert, auf dessen Grundlage die Stelleinheit (17) den Prüfkörper (19) mit der Prüfkraft (F) gegen die Sitzfläche (9) des Fahrzeugsitzes (1) drückt.

3. Verfahren nach Anspruch 1 oder 2, **dadurch gekennzeichnet, dass** die Stelleinheit (17) mitsamt Prüfkörper (19), das im Fahrzeugsitz (1) verbaute Sensorelement (5) und die Prüfeinheit (15) in einer Steuerstrecke eingebunden sind, mittels der die Funktionsprüfung vollautomatisch durchgeführt wird.

4. Verfahren nach einem der vorhergehenden Ansprüche, **dadurch gekennzeichnet, dass** der Prüfkörper (19) U-förmig ausgebildet ist und in etwa ein Insassen-Becken sowie Insassen-Oberschenkel nachbildet, und dass insbesondere ein Satz von Prüfkörpern (19) unterschiedlicher Geometrie bereitgestellt ist, mit deren Hilfe unterschiedliche Körperformen des Fahrzeuginsassen nachbildbar sind.

5. Verfahren nach Anspruch 4, **dadurch gekennzeichnet, dass** die Funktionsprüfung mit variierenden Prüfkörper-Geometrien, variierender Prüfkraft (Fₓ) und/oder variierenden Prüfkörper-Position (Pₓ) auf der Sitzfläche (9) des Fahrzeugsitzes (1) durchgeführt wird.

6. Verfahren nach Anspruch 5, **dadurch gekennzeichnet, dass** bei der Funktionsprüfung eine Prüfroutine erfolgt, bei der für zumindest eine Prüfkörper-Geometrie variierende Prüfkräfte (Fₓ) mit variierenden Prüfkörper-Positionen (Pₓ) zu Wertepaaren (Fₓ; Pₓ) kombiniert werden, und dass für jedes Wertepaar (Fₓ; Pₓ) die Prüfeinheit (15) ein Funktionsfähigkeitssignal (1) ermittelt, sofern ein Sitzbelegungssignal (B) vorliegt, oder ein Fehlersignal (0) ermittelt, sofern kein Belegungssignal (B) vorliegt.

7. Prüfanordnung zur Durchführung eines Verfahrens nach einem der vorhergehenden Ansprüche.
